# FASCICULE DE BREVET EUROPEEN

(11) **EP 3 490 940 B1**
(45) Date de publication et mention de la délivrance du brevet: **01.09.2021**
(21) Numéro de dépôt: 17754416.0
(22) Date de dépôt: 27.07.2017
(51) Int. Cl.: C02F 1/72, C09K 8/58, E21B 43/16, C02F 1/24, C02F 101/32, C02F 103/10

(54) **PROCEDE DE TRAITEMENT D'UNE EAU DE PRODUCTION ISSUE D'UN PROCEDE DE RECUPERATION ASSISTEE DU PETROLE ET/OU DU GAZ**
VERFAHREN ZUR AUFBEREITUNG VON PRODUKTIONSWASSER AUS EINEM VERFAHREN ZUR VERBESSERTEN RÜCKGEWINNUNG VON ÖL UND/ODER GAS
METHOD FOR TREATING PRODUCTION WATER FROM A METHOD FOR ENHANCED OIL AND/OR GAS RECOVERY

(30) Priorité: 28.07.2016 FR 1657327
(43) Date de publication de la demande: 05.06.2019
(73) Titulaire: SPCM SA, 42160 Andrézieux-Bouthéon (FR)
(72) Inventeur: FAVERO, Cédrick, 42160 Andrezieux Boutheon (FR); GIL, Ludwig, 42160 Andrezieux Boutheon (FR)
(74) Mandataire: Cabinet Laurent & Charras
(86) Numéro de dépôt international: PCT/FR2017/052117
(87) Numéro de publication internationale: WO 2018/020175

(56) Documents cités:
- EP-A1- 2 450 314
- FR-A1- 3 012 129
- US-A1- 2013 213 650
- US-A1- 2014 072 653
- AUDIBERT A ET AL: "Stability of water-soluble polymers in the presence of corrodible materials", POLYMER DEGRADATION AND STABILITY, BARKING, GB, vol. 40, no. 2, 1 janvier 1993 (1993-01-01), pages 151-165, XP024144676, ISSN: 0141-3910, DOI: 10.1016/0141-3910(93)90207-Y [extrait le 1993-01-01]

## Description

### DOMAINE DE L'INVENTION

La présente invention concerne le domaine technique de la récupération assistée d'hydrocarbures (pétrole et/ou gaz) dans un gisement. Plus précisément la présente invention concerne le domaine technique du traitement de l'eau de production issue de la récupération assistée d'hydrocarbures (pétrole et/ou gaz).

### ETAT ANTERIEUR DE LA TECHNIQUE

Le traitement de l'eau dans l'industrie pétrolière est un sujet de première importance car on estime que pour chaque baril de pétrole (huile) produit dans le monde, trois barils d'eau sont généralement co-produits. Cette co-production d'eau peut atteindre 9 à 99 barils d'eau par baril de pétrole dans les champs matures qui sont souvent concernés par la récupération assistée chimique du pétrole.

La récupération du pétrole brut contenu dans les gisements s'effectue de manière générale en plusieurs temps.

La production résulte d'abord de l'énergie naturelle des fluides et de la roche qui se décompriment. A l'issue de cette phase de déplétion, la quantité d'huile récupérée en surface représente en moyenne 5 à 15 % de la réserve initiale. Il est donc nécessaire dans un deuxième temps d'employer des techniques visant à accroître le rendement de récupération en maintenant la pression du champ.

La méthode la plus fréquemment mise en œuvre consiste à injecter de l'eau, et plus généralement de la saumure, dans le gisement par le biais de puits injecteurs dédiés à cette fin. On parle alors de récupération secondaire. Cette deuxième phase s'arrête lorsque la teneur en eau dans le mélange produit par les puits producteurs est trop importante. Le gain, ici, en termes de taux de récupération d'huile additionnelle est de l'ordre de 5 à 20%.

Les autres techniques utilisables sont regroupées sous le nom de récupération assistée du pétrole (RAP ou EOR pour l'acronyme anglais de « Enhanced Oil Recovery »). Leur but est de récupérer entre 10 et 35% d'huile additionnelle par rapport à la quantité initiale. Sous le terme de « récupération assistée du pétrole » sont connues diverses techniques thermiques, ou non telles que les techniques dites électriques, miscible, vapeur, ou encore chimiques de récupération améliorée du pétrole restant en place (voir « Oil & gas science and technology » - revue IFP, vol 63 (2008) n°1, pp 9-19). Par pétrole, on désigne tout type d'huile, à savoir huile légère comme huile lourde, voire bitumineuse. Il s'agit d'un mélange d'hydrocarbures. Les termes pétrole et huile sont équivalents et désignent tous les deux ce mélange d'hydrocarbures.

L'invention s'attache plus précisément à la technique de récupération assistée d'hydrocarbures (pétrole et/ou gaz) par voie chimique impliquant au minimum l'injection dans le gisement d'un fluide aqueux contenant un ou plusieurs polymères hydrosolubles.

On distingue les techniques de récupération assistée du pétrole (EOR) des opérations de stimulation d'un réservoir. Ces dernières sont caractérisées par des injections limitées en volume de solution de polymère afin de créer un phénomène localisé dans le réservoir, à savoir pour la conformance un bouchage des zones de fortes perméabilités, pour le « water shutt off » la prévention ou le bouchage de venues d'eau. Les injections sont généralement faites soit par un puits injecteur, soit par un puits producteur sur des durées assez faibles de quelques jours et toujours inférieures au mois, et avec des volumes représentant moins de 5 % du volume poreux du réservoir. Le volume poreux correspond au volume non occupé par la roche dans le réservoir qui est une zone perméable.

A l'opposé, les techniques de récupération assistée du pétrole (EOR) mettant en œuvre des polymères impliquent une injection continue et prolongée de solution de polymère afin de balayer le réservoir d'un puits injecteur jusqu'à un puits producteur. Le but n'est pas de traiter une zone du réservoir mais sa totalité afin de récupérer un maximum de pétrole (huile). Pour cela, il est nécessaire d'injecter un volume de solution aqueuse beaucoup plus important compris généralement entre 50% et 500%, voire plus, du volume poreux. Au niveau du ou des puits producteurs, on récupère alors un mélange aqueux, huileux et parfois gazeux pouvant contenir les résidus du polymère injecté.

L'injection d'un fluide visqueux de polymère selon la technique employée se fait seule ou en combinaison avec d'autres composés chimiques utiles à la récupération améliorée du pétrole.

Dans toutes ces techniques, l'addition de polymères hydrosolubles permet d'améliorer l'efficacité du balayage par injection d'eau. Les bénéfices attendus et prouvés de l'utilisation de polymères, au travers de la « viscosification » des eaux injectées, sont l'amélioration du balayage et du contrôle de la mobilité dans le champ afin de récupérer l'huile rapidement et efficacement. Ces polymères permettent d'augmenter la viscosité de l'eau d'injection.

Il est connu de l'homme du métier que les polymères hydrosolubles synthétiques et en particulier à base d'acrylamide sont des polymères très avantageux pour augmenter la viscosité des solutions aqueuses et sont de fait, majoritairement utilisés en récupération assistée d'hydrocarbures (pétrole et/ou gaz).

Les polymères dérivés d'acrylamides utilisés sont majoritairement anioniques et peuvent notamment être obtenus par :
- homopolymérisation ou copolymérisation d'acrylamide, d'ATBS, d'acide acrylique,
- co-hydrolyse ou post-hydrolyse d'un polyacrylamide,
- copolymérisation ou terpolymérisation de l'acrylamide avec d'autres monomères fonctionnels ioniques ou non.

Les polyacrylamides sont déjà largement utilisés en récupération assistée d'hydrocarbures (pétrole et/ou gaz) dans les techniques dites « polymer», « surfactant polymer », « alkaline surfactant polymer » (P, SP, ASP).

Le polymère injecté va au cours de son injection, et sa propagation dans une formation souterraine subir diverses dégradations mécaniques, chimiques et biologiques. Il va par ailleurs voir sa concentration diminuer. A la sortie du puits le polymère n'est donc pas identique en quantité et en qualité par rapport au polymère injecté et peut donc conférer à la partie aqueuse du fluide produit une viscosité inférieure. Par ailleurs, le fluide (eau + hydrocarbures), lors du balayage du réservoir, ou lors du passage dans les équipements va se charger en métaux et/ou H₂S.

Le fluide de production est traité de manière à séparer l'eau de production et les hydrocarbures (pétrole et/ou gaz). L'eau de production contient ces éventuels métaux et composés soufrés tels que H₂S. L'eau de production contient en outre les polymères éventuellement dégradés et des hydrocarbures résiduels, généralement moins de 10000 ppm d'hydrocarbures résiduels (pétrole et/ou gaz).

La dégradation chimique des polymères correspond au mécanisme le plus difficilement prévisible et quantifiable du fait qu'elle peut se produire selon de multiples mécanismes lors du stockage du fluide, lors de l'injection du fluide, ou au sein du réservoir.

La présence de viscosité dans l'eau de production nuit au traitement de la phase aqueuse. Le traitement est nécessaire pour permettre, selon les configurations, soit une décharge dans l'environnement, soit une réinjection dans un réservoir.

A l'inverse, la présence de polymère n'est pas gênante si elle n'engendre pas de viscosité excessive, généralement pas plus de 2 centipoises. Il n'est donc pas nécessaire d'éliminer le polymère mais il est nécessaire de limiter la viscosité que confère sa présence dans cette partie aqueuse.

Diverses techniques de traitement des eaux de production ont été proposées. La technique la plus simple dans le cadre d'opération de petite envergure, dite « pilote » est de mélanger le fluide produit contenant du polymère avec d'autres fluides n'en comprenant pas. La viscosité d'une solution de polymère est fonction entre autres de sa concentration. Par effet de dilution des phases aqueuses, la viscosité va être donc moins importante. Cette solution est uniquement viable pour des opérations de petites tailles.

Dans le cadre de grandes opérations, il faut alors traiter le fluide pour en réduire la viscosité. Une des solutions consiste à éliminer le polymère par précipitation ou par filtration.

Les techniques de précipitation consistent à utiliser des composés cationiques qui en interaction avec les charges anioniques du polymère vont provoquer son auto-coagulation. Comme composés cationiques couramment utilisés nous pouvons cité les sels métalliques comme l'aluminium ou le fer, des polymères cationiques de haute densité de charges et de bas poids moléculaire comme les polyDADMAC, EPI/DMA, DEC, ou encore des particules minérales comme les bentonites, les kaolins.

Les techniques de filtration consistent à utiliser des membranes, comme l'ultrafiltration.

L'élimination du polymère par précipitation ou par filtration n'est pas souhaitable car il est en général difficile de séparer de manière sélective le polymère de l'huile résiduelle. De plus les techniques existantes demandent de multiples étapes couteuses et ne permettent pas de valoriser l'huile résiduelle.

La solution la plus appropriée est de dégrader la chaine de polymère pour en abaisser le poids moléculaire. En effet, les interactions interchaînes d'un polymère qui engendrent la viscosité sont dues au poids moléculaire du polymère. Un polymère de poids moléculaire moins important aura moins d'interactions interchaînes et de ce fait une viscosité moins importante. Trois principaux types de dégradation ont été étudiés afin de réduire le poids moléculaire du polymère.

La moins efficace est la dégradation biologique car elle demande plusieurs heures ou plusieurs jours pour être significative. Ce type de traitement n'est pas en phase avec les débits et les temps de séjours observés dans le cadre de la récupération assistée d'hydrocarbures (pétrole et/ou gaz).

La seconde technique est la dégradation mécanique du fluide par cisaillement. Cette technique peut s'effectuer sur grille, fentes ou orifices, par dépressurisation rapide, par cavitation, par ultrason... Le polymère est alors cassé en fragments de poids moléculaires inférieurs. Ces traitements sont efficaces mais entrainent une diminution néfaste du diamètre des gouttes d'huile à épurer ensuite. Par ailleurs la dégradation mécanique peut s'avérer contraignante car nécessitant une forte puissance électrique.

La troisième technique étudiée est la dégradation chimique. Cette dégradation implique généralement la génération de radicaux libres qui vont réagir avec la chaine principale du polymère et engendrer une chute de son poids moléculaire. En résulte alors une chute de viscosité du fluide d'injection liée à une diminution du volume hydrodynamique.

Les radicaux libres peuvent provenir de différentes sources. Ils peuvent être générés par le clivage de liaisons faibles de la chaine de polymères sous l'effet de chauffage/friction ou par les résidus d'amorceurs ou des impuretés de sous-produits. Les systèmes red/ox sont également générateurs de radicaux libres.

La demande EP 2 450 314 propose un procédé de traitement de l'eau de production dans lequel le but est de dégrader le polymère résiduel présent dans l'eau issue d'un procédé de récupération assistée du pétrole, par un ajout d'un agent oxydant en excès pour dégrader le polymère, puis à ajouter une quantité d'agent réducteur suffisante pour neutraliser la totalité de l'oxydant en excès.

Le document US 2013/213650 décrit un procédé de récupération assistée du pétrole dans lequel le fluide récupéré peut être traité avec un agent de dégradation du polymère viscosifiant tels que par exemple des ions Fe²⁺.

Le document FR 3 012 129 décrit un procédé de traitement de l'eau de production provenant de la récupération assistée d'hydrocarbures, dans lequel l'eau est traitée avec un agent de dégradation comprenant un mélange de peroxyde d'hydrogène et un sel d'un métal de transition. Dans ces conditions, la réduction de la viscosité n'est pas satisfaisante.

Le document AUDIBERT A ET AL, "Stability of water-soluble polymers in the presence of corrodible materials", 01 janvier 1993 (1993-01-01), vol 40, no. 2, page 151-165, XP024144676 décrit la dégradation de solutions polymériques en présence d'oxygène et de fer.

Quoi qu'il en soit, les différents procédés connus à ce jour ne permettent pas d'obtenir un traitement sûr et efficace qui diminue la viscosité résiduelle tout en permettant la réutilisation de l'eau de production ainsi traitée sans utilisation massive de produits chimiques.

La Demanderesse a résolu ce problème technique en mettant au point un procédé de traitement de l'eau issue de la récupération assistée d'hydrocarbures (pétrole et/ou gaz) par introduction d'une quantité d'oxydant spécifique en présence d'ions Fe²⁺. Ce procédé permet ainsi d'obtenir une diminution de viscosité adéquate pour les différentes étapes du traitement de l'eau de production.

### EXPOSE DE L'INVENTION

La présente invention concerne un procédé de traitement de l'eau de production provenant de la récupération assistée d'hydrocarbures (pétrole et/ou gaz), tel que décrit en particulier dans les revendications 1 à 8.

On entend par « eau de production » toutes les eaux salées ou non salées, saumures, eau de mer, eau d'aquifère qui peuvent être issues d'un réservoir d'hydrocarbures. Eu égard à la présence de polymères éventuellement dégradés, l'eau de production présente généralement, à la sortie du puits de production, une viscosité appelée viscosité résiduelle. Outre l'eau de production, un procédé similaire à celui de l'invention mais ne tombant pas dans le champs de celle-ci peut également être mise en œuvre pour toute source de solution aqueuse polymérique.

En effet, la récupération assistée d'hydrocarbures (pétrole et/ou gaz) met en œuvre l'injection d'un fluide d'injection dans une formation souterraine.

De manière générale, le fluide d'injection comprend de l'eau (salée ou non, saumure...) et un ou plusieurs polymères hydrosolubles. Il peut notamment s'agir d'un copolymère à base d'acrylamide, d'acide acrylique, d'acide 2-acrylamido-2-méthylpropane sulfonique ou de N-vinyl pyrrolidone.

Ainsi, l'eau de production récupérée comprend un ou plusieurs polymères hydrosolubles générant une viscosité résiduelle néfaste au traitement de l'eau. Il s'agit du ou des polymères présents dans le fluide d'injection.

La Demanderesse a remarqué que la présence combinée d'ions Fe²⁺, d'un activateur de réaction et d'oxygène, avec un rapport spécifique O₂ introduit/ions Fe²⁺ permet de résoudre ce problème.

Comme déjà indiqué, la présente invention a pour objet le traitement de cette eau de production, et notamment la diminution de sa viscosité.

Plus précisément, la présente invention a pour objet un procédé de traitement de l'eau de production provenant de la récupération assistée d'hydrocarbures, et contenant un ou plusieurs polymères hydrosolubles et des ions Fe²⁺, consistant à oxyder au moins partiellement les ions Fe²⁺ par introduction d'au moins un activateur de réaction selon la liste précisée par la suite et d'oxygène dans ladite eau de production. Le rapport molaire oxygène introduit/ions Fe²⁺ est inférieur ou égal à 0.25.

Comme indiqué, l'eau de production provient d'un procédé de récupération assistée d'hydrocarbures. L'activateur de réaction permet d'activer la réaction d'oxydation des ions Fe²⁺ par l'oxygène et de dégradation du polymère.

L'activateur de réaction peut être introduit avant et/ou pendant et/ou après l'introduction de l'oxygène. En d'autres termes, il peut être introduit selon l'un des modes d'introduction suivants :
- avant l'introduction de l'oxygène ; ou
- pendant l'introduction de l'oxygène ; ou
- après l'introduction de l'oxygène ; ou
- avant et pendant l'introduction de l'oxygène ; ou
- avant et après l'introduction de l'oxygène ; ou
- pendant et après l'introduction de l'oxygène ; ou
- avant, pendant et après l'introduction de l'oxygène.

De manière générale, l'eau de production directement issue du traitement du fluide de production (eau + hydrocarbures) contient entre 0 et 500 ppm de Fe²⁺.

Lorsque la quantité de Fe²⁺ initialement présents dans l'eau de production est nulle ou insuffisante, des ions Fe²⁺ sont ajoutés préalablement à l'introduction de l'oxygène et éventuellement avant, pendant ou après l'activateur de réaction. Dans ce cas, les ions Fe²⁺ sont ajoutés selon les moyens connus de l'homme de l'art. A titre d'exemple, il peut s'agir de l'introduction du composé chlorure ferreux ou sulfate ferreux ou sel de Mohr.

De manière préférentielle l'eau de production traitée selon le procédé objet de l'invention contient au moins 1 ppm (en poids par rapport au poids de l'eau de production) de Fe²⁺, avantageusement entre 1 et 300 ppm de Fe²⁺, et plus préférentiellement entre 5 et 50 ppm de Fe²⁺. Ces ions Fe²⁺ peuvent provenir directement de l'eau de production. Ils peuvent également avoir été introduits avant de mettre en œuvre le procédé objet de l'invention.

Ainsi, selon un mode de réalisation particulier, la concentration en ions Fe²⁺ est d'au moins 1 ppm par rapport au poids de l'eau de production, les ions Fe²⁺ étant, le cas échéant, introduits préalablement à l'introduction de l'oxygène et éventuellement de l'activateur. Ce mode de réalisation est particulièrement adapté au cas où l'eau de production contient naturellement 0 ppm ou moins de 1 ppm d'ions Fe²⁺.

Selon un mode de réalisation particulier, les ions Fe²⁺ sont ajoutés avant, pendant ou après l'éventuel activateur mais avant l'introduction de l'oxygène.

Selon l'invention, l'eau de production contient initialement entre 0 et 500 ppb d'oxygène, préférentiellement entre 0 et 300 ppb, plus préférentiellement entre 0 et 50 ppb d'oxygène. Or, cette éventuelle quantité d'oxygène naturellement présente dans l'eau de production n'est pas suffisante pour oxyder les ions fer II de manière à provoquer la diminution de la viscosité de l'eau de production.

C'est la raison pour laquelle, la présente invention ne peut pas être mise en œuvre de manière inhérente. C'est l'addition volontaire d'une quantité maîtrisée d'oxygène qui permet de résoudre le problème technique qui est celui de diminuer la viscosité de l'eau de production par oxydation maitrisée d'ion Fe²⁺ de manière à dégrader les polymères présents dans l'eau de production et responsables de sa viscosité résiduelle.

En effet, la maîtrise de la quantité d'oxygène introduite dans l'eau permet d'en limiter la quantité résiduelle, et par conséquent les éventuels effets négatifs. Ces effets négatifs peuvent notamment concerner la qualité :
- des hydrocarbures résiduels pouvant être séparés de l'eau de production ; et
- de la solution de polymères hydrosolubles utilisée lorsque l'eau de production est recyclée pour être injectée dans un procédé de récupération assistée du pétrole.

Selon l'invention, l'oxygène est mis en contact avec l'eau de production par des moyens connus de l'homme de l'art. Cette mise en contact est avantageusement réalisée de manière hermétique, de manière à ce que seule la quantité d'oxygène voulue soit introduite.

La quantité d'oxygène introduit est définie en fonction de la quantité d'ions Fe²⁺ présents dans l'eau de production, notamment en fonction de la réaction suivante :

4 Fe²⁺ + 4H⁺ + O₂ → 4Fe³⁺ + 2H₂O

Ainsi, selon un mode de réalisation particulier, le procédé selon l'invention peut comprendre une étape de dosage des ions Fe²⁺ présents dans l'eau de production.

Les méthodes de titration du fer ferreux (Fe²⁺) reposent sur l'ASTM D 1068-77, Iron in Water. Le principe de cette méthode de mesure est de faire réagir le fer ferreux avec la 1,10-phénanthroline pour former un complexe orangé permettant de déterminer la concentration en ions Fe²⁺ soit comparativement par rapport à une gamme de concentration préétablie soit par mesure spectrophotométrique par rapport à un blanc. L'appareillage de titrage et les réactifs sont disponibles auprès des sociétés Hach ou Chemetrics.

De manière connue, l'eau de production contient généralement des hydrocarbures résiduels dont la quantité est typiquement inférieure à 10000 ppm. L'eau de production peut donc être traitée afin d'extraire ces hydrocarbures résiduels (pétrole et/ou gaz).

Ainsi, selon un mode de réalisation préféré, l'oxygène peut être ajouté au début du procédé de traitement de l'eau de production, c'est-à-dire après la séparation entre les hydrocarbures et l'eau de production contenus dans le fluide de production. Cette introduction de l'oxygène à ce stade permet de diminuer l'impact de la viscosité le plus tôt possible dans le processus d'épuration de l'eau.

Ainsi, selon un mode de réalisation particulier de l'invention, on traite l'eau de production par séparation de l'eau de production avec des hydrocarbures résiduels, par flottation et/ou décantation et/ou coalescence et/ou centrifugation et/ou filtration avantageusement réalisée par passage sur media filtrant (sable, charbon actif, coquilles de noix...).

Selon ce mode de réalisation particulier, l'oxygène peut notamment être introduit :
- pendant l'étape de séparation ; ou
- entre les étapes de séparation et de flottation et/ou de décantation et/ou de coalescence et/ou de centrifugation et/ou de filtration; ou
- pendant l'étape de flottation et/ou de décantation et/ou de coalescence et/ou de centrifugation et/ou de filtration.

Selon un mode de réalisation particulier de l'invention, l'introduction d'oxygène peut être réalisée dans une dérivation partielle de l'eau de production.

De manière avantageuse, on introduit dans l'eau de production entre 0.25 et 7 ppm d'oxygène, par rapport au poids de l'eau de production.

En outre, et de manière optionnelle, un compresseur peut être utilisé afin d'augmenter la saturation en oxygène, avantageusement dans la fraction déviée de l'eau de production.

Selon un mode de réalisation particulier, l'eau de production est traitée successivement par :
- séparation de l'eau de production et des hydrocarbures résiduels ;
- flottation de l'eau de production et/ou décantation de l'eau de production et/ou coalescence de l'eau de production et/ou centrifugation de l'eau de production ;
- filtration de l'eau de production ;
et l'oxygène est avantageusement introduit pendant l'étape de séparation.

Selon un autre mode de réalisation particulier, l'eau de production est traitée successivement par :
- séparation de l'eau de production et des hydrocarbures résiduels ;
- flottation de l'eau de production et/ou décantation de l'eau de production et/ou coalescence de l'eau de production et/ou centrifugation de l'eau de production ;
- filtration de l'eau de production ;
et l'oxygène est avantageusement introduit entre les étapes de séparation et de flottation et/ou de décantation et/ou de coalescence et/ou de centrifugation.

Selon un autre mode de réalisation particulier, l'eau de production est traitée successivement par :
- séparation de l'eau de production et des hydrocarbures résiduels ;
- flottation de l'eau de production et/ou décantation de l'eau de production et/ou coalescence de l'eau de production et/ou centrifugation de l'eau de production ;
- filtration de l'eau de production ;
et l'oxygène est avantageusement introduit pendant l'étape de flottation et/ou de décantation et/ou de coalescence et/ou de centrifugation.

L'activateur de réaction (oxydation du fer II et dégradation du polymère) est exclusivement choisi dans le groupe comprenant : citrate de stéaryle, citrate monoammonique, citrate de calcium, éthylènediaminetétraacétate de calcium disodique, phosphate monocalcique, phosphate tricalcique, phytate de calcium, acide citrique, éthylènediaminetétraacétate disodique, glycine, tripolyphosphate de sodium, acide phosphorique, phosphate monopotassique, pyrophosphate tétrapotassique, phosphate dipotassique, pyrophosphate acide de sodium, citrate de sodium, pyrophosphate tétrasodique, phosphate monosodique, phosphate disodique, hexamétaphosphate de sodium, acide N,N'-bis(2-hydroxybenzyl)-éthylènediamine-N,N'-diacétique, acide N-(1,2-dicarboxyéthyl)-D,L aspartique, acide diéthylène triamine pentacétique, acide humique, acide fulvique, polyacrylate, polyitaconate, polymaleate, et polyaspartate.

Comme déjà indiqué, l'activateur peut être introduit dans l'eau de production avant et/ou pendant et/ou après l'introduction de l'oxygène.

La quantité d'activateur introduite dans l'eau de production est avantageusement comprise entre 1 et 30 ppm, plus avantageusement entre 5 et 20 ppm, par rapport au poids de l'eau de production.

Sans vouloir émettre une quelconque théorie il semblerait que l'activateur accélère la diminution de la viscosité résiduelle de l'eau de production par accélération de la génération du flux de radicaux issus de réaction entre les ions Fe²⁺ et l'oxygène O₂.

En outre, et de manière optionnelle, un agent désoxygénant peut-être ajouté afin d'éliminer l'oxygène résiduel, en dernière étape, et donc après l'introduction d'oxygène et la diminution de la viscosité de l'eau de production.

Ce mode de réalisation est optionnel étant donné que la quantité d'oxygène résultante ne nécessite généralement pas l'introduction d'un agent réducteur. Le procédé objet de la présente invention est donc préférentiellement mis en œuvre en l'absence d'addition d'un réducteur pouvant éliminer l'éventuel oxygène résiduel.

Quoi qu'il en soit, cet agent désoxygénant peut notamment être choisi dans le groupe comprenant le sulfite, le bisulfite, le metabisulfite, la dithionite, l'hydrazine et les dérivés d'hydrazine hydroxylamine. Le document US 3,343,601 décrit notamment l'utilisation de ce type d'agent pour désoxygéner une solution de polyacrylamide.

Cet agent désoxygénant agit en tant qu'agent réducteur modifiant le potentiel redox de la formulation aqueuse. Il peut notamment s'agir de sulfites organiques tels que les sulfites alkylés, hydrosulfites d'alkyle, sulfinate, sulfoxylate, les phosphites mais aussi l'acide oxalique ou formique, les sels d'erythorbate, les carbohydrazides.

Ces composés sont généralement utilisés pour éliminer les traces d'oxygène présentes dans le fluide/eau d'injection et permettent d'atteindre typiquement des teneurs en oxygène dissous inférieures à 200 ppb (partie par billion). Préférentiellement, en accord avec les critères physico chimiques, toxicologiques, et industriels, les composés désoxygénant de type sulfites organiques et inorganiques sont particulièrement avantageux. On citera pour exemple le Na₂SO₃ (sulfite de sodium) et la NaDT (dithionite de sodium) ou l'ammonium bisulfite.

A l'issue de ce procédé de traitement de l'eau de production selon la présente invention, l'eau de production contient avantageusement moins de 500 ppb d'oxygène, préférentiellement moins de 300 ppb d'oxygène, et encore plus préférentiellement moins de 100 ppb d'oxygène.

Il existe des méthodes de mesure de l'oxygène dissous en ligne et ponctuelle. Les méthodes en ligne mesurent l'oxygène dissous selon deux principes, électrochimique et optique. L'appareillage est disponible auprès de fournisseurs comme Presens, Mettler Toledo, Hach, WTW. Les méthodes de mesure ponctuelle sont des méthodes colorimétriques utilisant l'oxydation de composés tels que l'indigo carmine et la rhodazine D. Le matériel de mesure est disponible auprès de la société Chemetrics.

En outre, à l'issue de ce procédé de traitement de l'eau de production selon la présente invention, l'eau de production contient avantageusement moins de 5 ppm de Fe²⁺, préférentiellement moins de 1 ppm de Fe²⁺, et encore plus préférentiellement moins de 0.5 ppm de Fe²⁺.

D'autre part, à l'issue de ce procédé de traitement de l'eau de production selon la présente invention, l'eau de production contient avantageusement moins de 100 ppm de Fe³⁺, préférentiellement moins de 10 ppm de Fe³⁺, et encore plus préférentiellement moins de 5 ppm de Fe³⁺.

Sans vouloir émettre une quelconque théorie, la Demanderesse considère que l'oxydation des ions Fe²⁺ conduit à la formation d'ions Fe³⁺ et de radicaux. Il semblerait que les ions Fe³⁺ dégradent beaucoup moins les polymères. La formation de radicaux lors de l'oxydation des ions Fe²⁺ permet de diminuer la viscosité résiduelle en dégradant le polymère. Le procédé de traitement permet donc de faciliter la formation de Fe³⁺ tout en diminuant la viscosité résiduelle de l'eau de production, le phénomène étant accéléré voire amplifié par la présence d'un activateur.

La présente invention concerne également un procédé de récupération assistée d'hydrocarbures (pétrole et/ou gaz) selon la revendication 9, comprenant un procédé de traitement d'eau de production tel que décrit précédemment et un procédé mettant en œuvre l'eau issue du procédé de traitement précédemment décrit, qui consiste à injecter une solution polymérique dans une formation souterraine et à récupérer les hydrocarbures. La solution polymérique injectée contient l'eau issue du procédé de traitement de l'eau de production décrit ci-dessus.

Ainsi, à l'issue de ce procédé de traitement de l'eau de production selon la présente invention, lorsque l'eau de production est réinjectée dans le réservoir, au moins un polymère hydrosoluble est ajouté avant l'injection dans la formation souterraine.

Le polymère est en pratique un polymère ou avantageusement un copolymère à base d'acrylamide, d'acide acrylique, d'acide 2-acrylamido-2-méthylpropane sulfonique ou de N-vinyl pyrrolidone.

L'invention et les avantages qui en découlent ressortent bien des exemples de réalisation suivants donnés afin d'illustrer l'invention et non de manière limitative.

### FIGURES

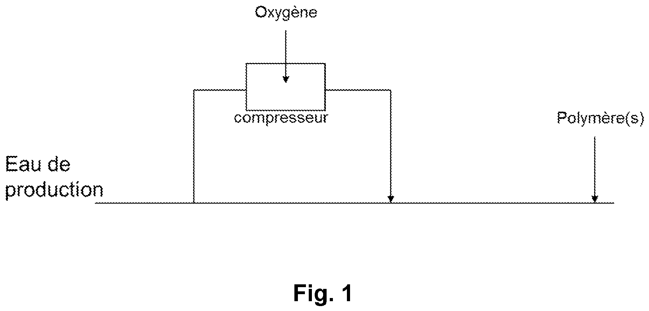

La figure 1 représente un mode de réalisation particulier de l'invention mettant en œuvre un compresseur pour introduire l'oxygène dans une fraction déviée de l'eau de production.

### EXEMPLES DE REALISATION DE L'INVENTION

La diminution de la viscosité d'une solution aqueuse polymérique a été étudiée au cours du temps.

### Protocole

Une saumure synthétique est préparée à base d'eau déionisée et des sels suivants :
- NaCl : 3.3 g/L
- CaCl₂, 2 H₂O: 0.1 g/L
- MgCl₂, 6 H₂O: 0.1 g/L
- NaHCO₃ : 1.5 g/L
- Na₂SO₄ : 0.2 g/L

Une partie de la saumure est ensuite dégazée par bullage à l'azote sous atmosphère anoxique (moins de 50 ppb d'oxygène) pendant une heure.

Une solution de polymère est préparée dans la saumure dégazée sous atmosphère anoxique. Le polymère utilisé est un copolymère acrylamide/acide acrylique (70/30 en poids), ayant un poids moléculaire de 7 Millions g/mol.

Lors des différents essais on ajoute séquentiellement du chlorure ferreux, un activateur (EDTA - Éthylène Diamine Tétra-Acétique) et de la saumure non dégazée (teneur en oxygène = 7 ppm) à la solution de polymère de manière à obtenir une concentration en polymère de 600 ppm.

La solution est maintenue sous agitation et la viscosité résiduelle est mesurée à 5 minutes et à 30 minutes (viscosimètre Brookfield, module UL à 6 rpm à 25°C ; rpm = tour par minute). A 30 minutes la teneur en oxygène résiduel est mesurée.

Tous les essais sont effectués sous atmosphère anoxique (moins de 50 ppb d'oxygène).

**Tableau 1 : Quantités d'oxygène, d'ions Fe²⁺ et d'activateur mises en œuvre dans les contre exemples (CE) et exemples selon l'invention (INV).**

| | CE-1 | CE-2 | CE-3 | CE-4 | CE-5 | CE-6 | INV-1 | INV-2 |
|---|---|---|---|---|---|---|---|---|
| Oxygène (ppm) | 0 | 7 | 1 | 7 | 7 | 7 | 1 | 1 |
| Fer II (ppm) | 0 | 10 | 10 | 0 | 0 | 10 | 10 | 10 |
| Activateur (ppm) | 0 | 0 | 0 | 0 | 20 | 15 | 20 | 5 |

**Tableau 2 : Diminution de la viscosité (cps) en fonction du temps pour une solution selon les contre exemples CE-1 à CE-6.**

| | CE-1 | CE-2 | CE-3 | CE-4 | CE-5 | CE-6 |
|---|---|---|---|---|---|---|
| Viscosité initiale | 10 | 10 | 10 | 10 | 10 | 10 |
| Viscosité à 5 minutes | 10 | 7.5 | 10 | 10 | 9.5 | 6 |
| Viscosité à 30 minutes | 10 | 5.5 | 8.5 | 10 | 9.5 | 6 |
| Oxygène résiduel à 30 minutes (ppm) | 0 | 6 | 0.8 | 7 | 7 | 6 |

**Tableau 3 : Diminution de la viscosité (cps) en fonction du temps pour une solution selon les exemples selon l'invention INV-1 à INV-2.**

| | INV-1 | INV-2 |
|---|---|---|
| Viscosité initiale | 10 | 10 |
| Viscosité à 5 minutes | 6 | 7 |
| Viscosité à 30 minutes | 5 | 5.5 |
| Oxygène résiduel à 30 minutes (ppm) | 0.1 | 0.3 |

Une dégradation acceptable de la viscosité est obtenue à haute concentration d'oxygène et de fer (CE-2 et CE-6) ainsi qu'à haute concentration d'oxygène, de fer et d'activateur. Dans ces deux cas, la teneur en oxygène résiduelle reste élevée, ce qui est un inconvénient dans le procédé utilisé en raison de la corrosion engendré. Une avancée majeure est l'utilisation d'un activateur qui combiné avec du fer et une concentration moindre en oxygène (INV-1 et INV-2) va conduire à un abaissement de la viscosité et à une concentration résiduelle en oxygène comprise entre 100 et 500 ppb. Cette faible concentration en oxygène peut être réduite par un post ajout d'un réducteur pour maintenir de faibles teneurs en oxygène.

Dans les 3 contre-exemples suivants (CE-7 à CE-9), on remplace l'oxygène par un autre oxydant, l'hypochlorite de sodium comme dans le document EP 2 450 314.

**Tableau 4 : Quantités (en poids) d'hypochlorite de sodium, d'ions Fe²⁺ et d'activateur mises en œuvre dans les contre exemples CE-7 à CE-9.**

| | CE-7 | CE-8 | CE-9 |
|---|---|---|---|
| Hypochlorite de sodium (ppm) | 1 | 1 | 1 |
| Fe II (ppm) | 0 | 10 | 10 |
| Activateur (ppm) | 0 | 0 | 5 |

**Tableau 5 : Diminution de la viscosité (cps) en fonction du temps pour une solution selon les contre exemples CE-7 à CE-9.**

| | CE-7 | CE-8 | CE-9 |
|---|---|---|---|
| Viscosité initiale | 10 | 10 | 10 |
| Viscosité à 5 minutes | 10 | 8 | 8.5 |
| Viscosité à 30 minutes | 9.5 | 7.5 | 8.5 |

Bien qu'utilisant un oxydant décrit dans l'art antérieur, la baisse de la viscosité n'est pas suffisante à ce dosage.

Dans les 3 contre-exemples suivants (CE-10 à CE-12), on remplace l'oxygène par un autre oxydant, le peroxyde d'hydrogène.

**Tableau 6 : Quantités (en poids) de peroxyde d'hydrogène. d'ions Fe²⁺et d'activateur mises en œuvre dans les contre exemples CE-10 à CE-12.**

| | CE-10 | CE-11 | CE-12 |
|---|---|---|---|
| Peroxyde d'hydrogène (ppm) | 1 | 1 | 1 |
| Fe II (ppm) | 0 | 10 | 10 |
| Activateur (ppm) | 0 | 0 | 5 |

**Tableau 7 : Diminution de la viscosité (cps) en fonction du temps pour une solution selon les contre exemples CE-10 à CE-12.**

| | CE-10 | CE-11 | CE-12 |
|---|---|---|---|
| Viscosité initiale | 10 | 10 | 10 |
| Viscosité à 5 minutes | 10 | 8.5 | 9 |
| Viscosité à 30 minutes | 9 | 8 | 8.5 |

Bien qu'utilisant un oxydant, la baisse de la viscosité n'est pas suffisante à ce dosage.

Dans les 3 contre-exemples suivants (CE-13 à CE-15), on remplace l'oxygène par un autre oxydant, le permanganate de potassium.

**Tableau 8 : Quantités (en poids) de permanganate de potassum, d'ions Fe²⁺ etd'activateur mises en œuvre dans les contre exemples CE-13 à CE-15.**

| | CE-13 | CE-14 | CE-15 |
|---|---|---|---|
| Permanganate de potassium (ppm) | 1 | 1 | 1 |
| Fe II (ppm) | 0 | 10 | 10 |
| Activateur (ppm) | 0 | 0 | 5 |

**Tableau 9 : Diminution de la viscosité (cps) en fonction du temps pour une solution selon les contre exemples CE-13 à CE-15.**

| | CE-13 | CE-14 | CE-15 |
|---|---|---|---|
| Viscosité initiale | 10 | 10 | 10 |
| Viscosité à 5 minutes | 10 | 9 | 9.5 |
| Viscosité à 30 minutes | 9.5 | 8 | 8.5 |

Bien qu'utilisant un oxydant, la baisse de la viscosité n'est pas suffisante à ce dosage.

La réutilisation de l'eau traitée pour la dissolution d'un polymère «neuf» a été étudié.

Deux solutions contenant 1000 ppm d'un copolymère acrylamide/acide acrylique (70/30 en poids), ayant un poids moléculaire de 18 Millions g/mol, sont préparées. Chaque solution est préparée respectivement avec l'eau traitée du contre-exemple CE-3 et de l'exemple INV-1 selon l'invention.

La viscosité des solutions est mesurée à 20°C au bout de 3 jours après séjour en étuve à 55°C.

La viscosité de la solution préparée avec l'eau traitée du contre-exemple CE-3 est de 16.5 cps.

La viscosité de la solution préparée avec l'eau traitée de l'exemple INV-1 selon l'invention est de 26.5 cps.

Les résultats démontrent bien que le procédé selon l'invention permet d'obtenir une eau apte pour la dissolution de polymère.

## Revendications

1. Procédé de traitement de l'eau de production provenant de la récupération assistée d'hydrocarbures, et contenant un ou plusieurs polymères hydrosolubles et des ions Fe²⁺, consistant à oxyder au moins partiellement les ions Fe²⁺ par introduction d'au moins un activateur de réaction et d'oxygène dans ladite eau de production, le rapport molaire oxygène introduit/ions Fe²⁺ étant inférieur ou égal à 0.25, l'activateur de réaction permettant d'activer la réaction d'oxydation des ions Fe²⁺ par l'oxygène et de dégradation du polymère et choisi dans le groupe comprenant : citrate de stéaryle, citrate monoammonique, citrate de calcium, éthylènediaminetétraacétate de calcium disodique, phosphate monocalcique, phosphate tricalcique, phytate de calcium, acide citrique, éthylènediaminetétraacétate disodique, glycine, tripolyphosphate de sodium, acide phosphorique, phosphate monopotassique, pyrophosphate tétrapotassique, phosphate dipotassique, pyrophosphate acide de sodium, citrate de sodium, pyrophosphate tétrasodique, phosphate monosodique, phosphate disodique, hexamétaphosphate de sodium, acide N,N'-bis(2-hydroxybenzyl)-éthylènediamine-N,N'-diacétique, acide N-(1,2-dicarboxyéthyl)-D,L aspartique, acide diéthylène triamine pentacétique, acide humique, acide fulvique, polyacrylate, polyitaconate, polymaleate, et polyaspartate..

2. Procédé selon la revendication 1, ***caractérisé* en ce que** l'activateur est introduit dans l'eau de production selon un des modes d'introduction suivants :
- avant l'introduction de l'oxygène ;
- pendant l'introduction de l'oxygène ;
- après l'introduction de l'oxygène ;
- avant et pendant l'introduction de l'oxygène ;
- avant et après l'introduction de l'oxygène ;
- pendant et après l'introduction de l'oxygène ;
- avant, pendant et après l'introduction de l'oxygène.

3. Procédé selon l'une des revendications 1 à 2, ***caractérisé* en ce qu'**on introduit dans l'eau de production entre 1 et 30 ppm d'activateur, par rapport au poids de l'eau de production.

4. Procédé selon l'une des revendications 1 à 3, ***caractérisé* en ce qu'**on introduit dans l'eau de production entre 0.25 et 7 ppm d'oxygène, par rapport au poids de l'eau de production.

5. Procédé selon l'une des revendications 1 à 4, ***caractérisé* en ce qu'**on traite l'eau de production successivement par :
- séparation de l'eau de production et des hydrocarbures résiduels ;
- flottation de l'eau de production et/ou décantation de l'eau de production et/ou coalescence de l'eau de production et/ou centrifugation de l'eau de production ;
- filtration de l'eau de production ;
et **en ce qu'**on introduit l'oxygène pendant l'étape de séparation.

6. Procédé selon l'une des revendications 1 à 4, ***caractérisé* en ce qu'**on traite l'eau de production successivement par :
- séparation de l'eau de production et des hydrocarbures résiduels ;
- flottation de l'eau de production et/ou décantation de l'eau de production et/ou coalescence de l'eau de production et/ou centrifugation de l'eau de production ;
- filtration de l'eau de production ;
et **en ce qu'**on introduit l'oxygène entre les étapes de séparation et de flottation et/ou de décantation et/ou de coalescence et/ou de centrifugation.

7. Procédé selon l'une des revendications 1 à 4, ***caractérisé* en ce qu'**on traite l'eau de production successivement par :
- séparation de l'eau de production et des hydrocarbures résiduels ;
- flottation de l'eau de production et/ou décantation de l'eau de production et/ou coalescence de l'eau de production et/ou centrifugation de l'eau de production ;
- filtration de l'eau de production ;
et **en ce qu'**on introduit l'oxygène pendant l'étape de flottation et/ou de décantation et/ou de coalescence et/ou de centrifugation.

8. Procédé selon l'une des revendications 1 à 7, ***caractérisé* en ce que** la concentration en ions Fe²⁺ est d'au moins 1 ppm par rapport au poids de l'eau de production ; et **en ce que**, le cas échéant, on introduit des ions Fe²⁺ préalablement à l'introduction de l'oxygène.

9. Procédé de récupération assistée d'hydrocarbures comprenant un procédé de traitement de l'eau de production selon l'une des revendications 1 à 8 et un procédé consistant à injecter une solution polymérique dans une formation souterraine et à récupérer les hydrocarbures, où la solution polymérique contient l'eau issue du procédé objet de l'une des revendications 1 à 8.

## Patentansprüche

1. Verfahren zur Behandlung von Produktionswasser aus der assistierten Rückgewinnung von Kohlenwasserstoffen, das ein oder mehrere wasserlösliche Polymere und Fe²⁺-Ionen enthält, das darin besteht, die Fe²⁺-Ionen zumindest teilweise zu oxidieren, indem mindestens ein Reaktionsaktivator und Sauerstoff in das Produktionswasser eingebracht werden, wobei das Molverhältnis von eingebrachtem Sauerstoff zu Fe²⁺-Ionen kleiner oder gleich 0,25 ist, wobei der Reaktionsaktivator es ermöglicht, die Reaktion der Oxidation der Fe²⁺-Ionen durch Sauerstoff und den Abbau des Polymers zu aktivieren und ausgewählt ist aus der Gruppe von: Stearylcitrat, Monoammoniumcitrat, Calciumcitrat, Dinatriumethylendiamintetraacetat, Monocalciumphosphat, Tricalciumphosphat, Calciumphytat, Zitronensäure, Dinatriumethylendiamintetraacetat, Glycin, Natriumtripolyphosphat, Phosphorsäure, Monokaliumphosphat, Tetrakaliumpyrophosphat, Dikaliumphosphat, Natriumpyrophosphat, Natriumcitrat, Tetranatriumpyrophosphat, Mononatriumphosphat, Dinatriumphosphat, Natriumhexametaphosphat, N,N'-Bis(2-hydroxybenzyl)ethylendiamin-N,N'-diessigsäure, N-(1,2-Dicarboxyethyl)-D,L-Asparaginsäure, Diethylentriaminpentaessigsäure, Huminsäure, Fulvinsäure, Polyacrylat, Polyitaconat, Polymaleat und Polyaspartat.

2. Verfahren gemäß Anspruch 1, **dadurch gekennzeichnet, dass** der Aktivator auf eine der folgenden Arten in das Produktionswasser eingebracht wird:
- vor der Einleitung von Sauerstoff;
- während der Einleitung von Sauerstoff;
- nach der Einleitung von Sauerstoff;
- vor und während der Einleitung von Sauerstoff;
- vor und nach der Einleitung von Sauerstoff;
- während und nach der Einleitung von Sauerstoff;
- vor, während und nach der Einleitung von Sauerstoff.

3. Verfahren gemäß einem der Ansprüche 1 bis 2, **dadurch gekennzeichnet, dass** dem Produktionswasser zwischen 1 und 30 ppm Aktivator, bezogen auf das Gewicht des Produktionswassers, hinzugefügt werden.

4. Verfahren gemäß einem der Ansprüche 1 bis 3, **dadurch gekennzeichnet, dass** dem Produktionswasser zwischen 0,25 und 7 ppm Sauerstoff, bezogen auf das Gewicht des Produktionswassers, hinzugefügt werden.

5. Verfahren gemäß einem der Ansprüche 1 bis 4, **dadurch gekennzeichnet, dass** das Produktionswasser nacheinander folgende Behandlungen durchläuft:
- Trennung von Produktionswasser und Restkohlenwasserstoffen;
- Flotation des Produktionswassers und/oder Dekantierung des Produktionswassers und/oder Koaleszenz des Produktionswassers und/oder Zentrifugation des Produktionswassers;
- Filtration des Produktionswassers,
sowie durch die Einbringung, während des Trennungsschritts, von Sauerstoff.

6. Verfahren gemäß einem der Ansprüche 1 bis 4, **dadurch gekennzeichnet, dass** das Produktionswasser nacheinander folgende Behandlungen durchläuft:
- Trennung von Produktionswasser und Restkohlenwasserstoffen;
- Flotation des Produktionswassers und/oder Dekantierung des Produktionswassers und/oder Koaleszenz des Produktionswassers und/oder Zentrifugation des Produktionswassers;
- Filtration des Produktionswassers,
sowie durch die Einbringung, zwischen den Trenn- und Flotations- und/oder Dekantier- und/oder Koaleszenz- und/oder Zentrifugierschritten von Sauerstoff.

7. Verfahren gemäß einem der Ansprüche 1 bis 4, **dadurch gekennzeichnet, dass** das Produktionswasser nacheinander folgende Behandlungen durchläuft:
- Trennung von Produktionswasser und Restkohlenwasserstoffen;
- Flotation des Produktionswassers und/oder Dekantierung des Produktionswassers und/oder Koaleszenz des Produktionswassers und/oder Zentrifugation des Produktionswassers;
- Filtration des Produktionswassers,
sowie durch die Einbringung, während des Flotations- und/oder Dekantier- und/oder Koaleszenz- und/oder Zentrifugierschritts, von Sauerstoff.

8. Verfahren gemäß einem der Ansprüche 1 bis 7, **dadurch gekennzeichnet, dass** die Konzentration an Fe²⁺-Ionen mindestens 1 ppm, bezogen auf das Gewicht des Produktionswassers, beträgt und dass, falls erforderlich, Fe²⁺-Ionen vor der Einleitung des Sauerstoffs eingebracht werden.

9. Verfahren zur assistierten Kohlenwasserstoffrückgewinnung, umfassend ein Verfahren zur Behandlung von Produktionswasser nach einem der Ansprüche 1 bis 8 und ein Verfahren zur Injektion einer polymeren Lösung in eine unterirdische Formation, um die Kohlenwasserstoffe zurückzugewinnen, wobei die polymere Lösung das Wasser aus dem Verfahren nach einem der Ansprüche 1 bis 8 enthält.

## Claims

1. Method for treating production water originating from enhanced hydrocarbon recovery, and containing one or more water-soluble polymers and Fe²⁺ ions, consisting in at least partially oxidizing the Fe²⁺ ions by introducing at least one reaction activator and oxygen into said production water, the molar ratio of introduced oxygen to Fe²⁺ ions being less than or equal to 0.25, the reaction activator making it possible to activate the oxidation reaction of the Fe2+ ions by the oxygen and degradation of the polymer is chosen from the group comprising stearyl citrate, monoammonium citrate, calcium citrate, calcium disodium ethylenediaminetetraacetate, monocalcium phosphate, tricalcium phosphate, calcium phytate, citric acid, disodium ethylenediaminetetraacetate, glycine, sodium tripolyphosphate, phosphoric acid, monopotassium phosphate, tetrapotassium pyrophosphate, dipotassium phosphate, sodium acid pyrophosphate, sodium citrate, tetrasodium pyrophosphate, monosodium phosphate, disodium phosphate, sodium hexametaphosphate, N,N'-bis(2-hydroxybenzyl)-ethylenediamine-N,N'-diacetic acid, N-(1,2-dicarboxyethyl)-D,L aspartic acid, diethylene triamine pentacetic acid, humic acid, fulvic acid, polyacrylate, polyitaconate, polymaleate, and polyaspartate.

2. Method according to claim 1, wherein the activator is introduced into the production water according to one of the following introduction modes:
- before the introduction of the oxygen;
- during the introduction of the oxygen;
- after the introduction of the oxygen;
- before and during the introduction of the oxygen;
- before and after the introduction of the oxygen;
- during and after the introduction of the oxygen;
- before, during and after the introduction of the oxygen.

3. Method according to one of claims 1 to 2, **characterized in that** between 1 and 30 ppm of activator is introduced into the production water, relative to the weight of the production water.

4. Method according to one of claims 1 to 3, **characterized in that** between 0.25 and 7 ppm of oxygen is introduced into the production water, relative to the weight of the production water.

5. Method according to one of claims 1 to 4, **characterized in that** the production water is successively treated by:
- separation of the production water and residual hydrocarbons;
- flotation of the production water and/or decanting of the production water and/or coalescence of the production water and/or centrifugation of the production water;
- filtration of the production water;
and wherein the oxygen is introduced during the separation step.

6. Method according to one of claims 1 to 4, **characterized in that**, wherein the production water is successively treated by:
- separation of the production water and residual hydrocarbons;
- flotation of the production water and/or decanting of the production water and/or coalescence of the production water and/or centrifugation of the production water;
- filtration of the production water;
and wherein the oxygen is introduced between the separation and flotation and/or decanting and/or coalescence and/or centrifugation steps.

7. Method according to one of claims 1 to 4, **characterized in that**, wherein the production water is successively treated by:
- separation of the production water and residual hydrocarbons;
- flotation of the production water and/or decanting of the production water and/or coalescence of the production water and/or centrifugation of the production water;
- filtration of the production water;
and wherein the oxygen is introduced during the flotation and/or decanting and/or coalescence and/or centrifugation step.

8. Method according to one of claims 1 to 7, **characterized in that** the concentration in Fe²⁺ ions initially present in the production water is at least 1 ppm relative to the weight of the production water; or if, prior to the introduction of the oxygen, the quantity of Fe²⁺ ions is less than 1 ppm, then Fe²⁺ ions are introduced before the introduction of the oxygen.

9. Enhanced hydrocarbon recovery method comprising a method for treating production water according to claims 1 to 8 and a process consisting in injecting a polymer solution into an underground formation and recovering the hydrocarbons, wherein the polymer solution contains water originating from the process of claims 1 to 8.
